Europäisches Patentamt

European Patent Office

Office européen des brevets

(19)

(11) Numéro de publication: **0 184 956**
**B1**

(12) **FASCICULE DE BREVET EUROPEEN**

(45) Date de publication du fascicule du brevet: **27.06.90**

(51) Int. Cl.⁵: **G 01 S 13/78**

(21) Numéro de dépôt: **85402224.1**

(22) Date de dépôt: **15.11.85**

(54) **Dispositif de prétraitement pour extracteur radar secondaire.**

(30) Priorité: **20.11.84 FR 8417677**

(43) Date de publication de la demande:
**18.06.86 Bulletin 86/25**

(45) Mention de la délivrance du brevet:
**27.06.90 Bulletin 90/26**

(84) Etats contractants désignés:
**DE GB IT NL**

(56) Documents cités:
**FR-A-2 407 487**
**US-A-3 875 570**

(73) Titulaire: **THOMSON-CSF**
**51, Esplanade du Général de Gaulle**
**F-92800 Puteaux (FR)**

(72) Inventeur: **Delille, François**
**THOMSON-CSF SCPI 173, bld Haussmann**
**F-75379 Paris Cedex 08 (FR)**
Inventeur: **Guerin, Claude**
**THOMSON-CSF SCPI 173, bld Haussmann**
**F-75379 Paris Cedex 08 (FR)**
Inventeur: **Wybierala, Michel**
**THOMSON-CSF SCPI 173, bld Haussmann**
**F-75379 Paris Cedex 08 (FR)**

(74) Mandataire: **El Manouni, Josiane et al**
**THOMSON-CSF SCPI**
**F-92045 PARIS LA DEFENSE CEDEX 67 (FR)**

EP 0 184 956 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention concerne un dispositif de prétraitement pour extracteur radar secondaire.

On distingue habituellement, parmi les réponses arrivant sur une antenne radar secondaire, les réponses dites synchrones qui sont les réponses de cibles situées dans le lobe d'interrogation du radar aux interrogations de ce radar, et les réponses dites asynchrones, qui sont les réponses de cibles situées dans le lobe d'interrogation du radar à des interrogations provenant d'autres radars.

Le nombre de ces réponses asynchrones peut, dans certains cas, s'avérer très important. C'est par exemple le cas, dans l'application da plus typique à la surveillance de la navigation aérienne, d'une forte densité d'avions dans un secteur azimutal avec de nombreux radars présents dans ce secteur.

Si rien n'est alors fait pour éliminer ces réponses asynchrones avant le traitement proprement dit de l'ensemble des réponses, synchrones et asynchrones, le dispositif de traitement de ces réponses, constitué le plus souvent par un processeur, risque de voir son taux de charge augmenter et par conséquent d'être saturé.

Il est connu, par exemple du brevet FR—A—2 407 487, d'utiliser, pour éliminer ces réponses, des appareils appelés défruiteurs.

Le fonctionnement de ces défruiteurs est basé sur le fait que, de récurrence à récurrence d'un radar secondaire, la position dans le temps des réponses synchrones est, à l'inverse des réponses asynchrones, inchangée par rapport à la position dans le temps des impulsions d'interrogation. Ces défruiteurs modulent généralement cette observation suivant une critère de deux sur trois et concluent ainsi à la présence d'un réponse synchrone si, sur un ensemble de trois récurrences successives, la position dans le temps de cette réponse est inchangée par rapport à la position dans le temps de l'impulsion d'interrogation qui lui a donné lieu, sur au moins deux d'entre elles, et à la présence d'une réponse asynchrone dans le cas inverse. Mais le principe même de ces défruiteurs fait qu'ils éliminent systématiquement non seulement les réponses asynchrones mais aussi les réponses synchrones provenant de cibles dites "en difficulté" c'est-à-dire ne répondant que de façon sporadique aux interrogations du radar secondaire.

Les exemples de cibles "en difficulté" peuvent être fort nombreux en pratique. Il peut s'agir par exemple, dans le cas de l'application à la surveillance de la navigation aérienne, d'avoins en limite de visibilité du radar (par exemple avions en cours de manoeuvre, ou équipés d'une antenne qui n'est pas parfaitement omnidirectionnelle en azimut). Un autre exemple peut également être trouvé dans le fait que le système d'émission d'un avion est normalement bloqué pendant un court instant après sa réponse à une interrogation venant d'un autre radar.

La présente invention n'a pas pour but d'éliminer totalement cet inconvénient, mais de la réduire le plus possible, en utilisant pour cela une commande sectorielle du défruiteur, grâce à laquelle celui-ci n'est activé que dans les secteurs azimutaux à forte densité de réponses et n'est pas activé dans les secteurs azimutaux à faible densité de réponses, la charge du processeur de traitement n'étant par ailleurs pas affectée dans ces derniers secteurs.

L'extracteur radar secondaire suivant l'invention, comportant un défruiteur pour éliminer les réponses asynchrones réçues par ce radar, est caractérisé en ce qu'il comporte en outre un dispositif de pretraitement composé d'un circuit de réponses reçues par le radar, de moyens de mesure des variations de la densité de réponses réçues par ce radar et de moyens pour activer ou inhiber ce défruiteur suivant le résultant fourni par lesdits moyens de mesure.

Les objets et caractéristiques de la présente invention apparaîtront plus clairement à la lecture de la description suivant d'un exemple de réalisation, fait en relation avec les dessins ci-annexés dans lesquels:

La figure 1 est un schéma synoptique du dispositif suivant l'invention.

La figure 2 est un diagramme représentant la position respective, dans le temps et dans l'espace, de deux secteurs azimutaux observés successivement et permettant de mesurer les variations de la densité de réponses.

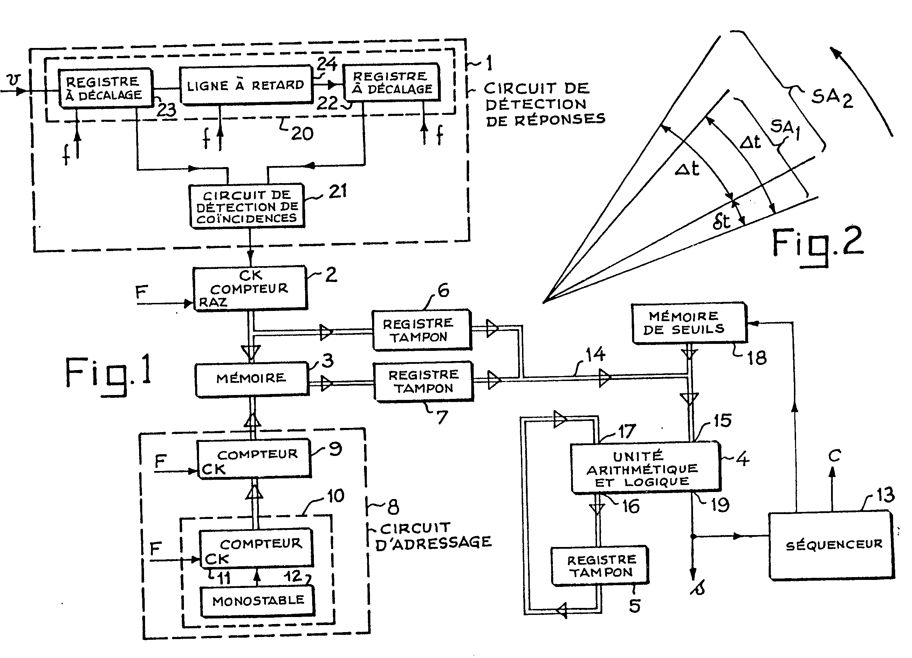

Le dispositif de prétraitement pour extracteur radar secondaire représenté sur la figure 1 comporte des moyens de mesure des variations de la densité de réponses reçues par ce radar. En pratique, et notamment dans le cas de l'application au contrôle de la navigation aérienne, l'expérience montre que la densité de réponses peut varier considérablement d'un secteur azimutal à l'autre, notamment suivant le nombre de réponses asynchrones reçues.

Cette densité de réponses est obtenue en mesurant le nombre M de réponses reçues par secteur azimutal ayant une ouverture correspondant à une durée $\Delta t$. Les variations de cette densité de réponses sont par ailleurs mesurées en observant l'évolution de la densité de réponses ainsi obtenue pour différents secteurs azimutaux. Pour une analyse plus fine de ces variations, deux secteurs azimutaux $SA_1$ et $SA_2$ observés successivement ne sont pas disjoints mais se recouvrent partiellement, étant distants d'une durée $\delta t < \Delta t$, comme représenté sur la figure 2.

La durée $\Delta t$ à prendre en compte pour la mesure de la densité de réponses ne doit pas être trop faible pour que cette mesure soit significative et pour éviter un hachage dans la commande du défruiteur. En revanche l'intervalle de temps $\delta t$ à prendre en compte pour apprécier l'évolution de cette densité ne doit pas être trop grand pour pouvoir apprécier des "points" de réponses.

Dans l'exemple de réalisation décrit ci-après, l'intervalle de temps $\Delta t$ est choisi égal à un nombre entier N de récurrences du radar secondaire, ce qui revient à mesurer le nombre

2

"M" de réponses reçues par secteur azimutal ayant une ouverture correspondant au passage de N récurrences du signal radar émis. L'intervalle de temps δt est par ailleurs choisi égal à une récurrence.

Les moyens de mesure des variations de la densité de réponses comportent tout d'abord un circuit 1 de détection de réponses, et un compteur 2 pour comptabiliser le nombre de réponses "m" ainsi détectées par le circuit 1 pendant chaque récurrence.

Les moyens de mesure des variations de la densité de réponse comportent également une mémoire 3 de P mots (avec P≥N) pour stocker les résultats "m" successifs obtenus par le compteur 2 pour chacune des N récurrences prises en compte pour la mesure de la densité de réponses. Cette mémoire est mis à jour à la fin de chaque récurrence.

Les moyens de mesure des variations de la densité de réponses comportent également une unité arithmétique et logique 4 pour calculer, pendant le premier cycle de N récurrences qui suit l'initialisation, la somme M(=Σm) des réponses obtenues sur l'ensemble de ces N récurrences et pour actualiser ensuite cette somme, pendant les cycles de N récurrences suivants, afin de tenir compte de son évolution, en ajoutant à la dernière somme trouvée, stockée dans un registre tampon 5, le nombre "m" de réponses trouvé pendant la récurrence en cours, fourni par le compteur 2 et temporairement stocké dans un registre tampon 6, et en lui retranchant le nombre "m" de réponses le plus ancien stocké dans la mémoire 3, lu dans cette mémoire, et temporairement stocké dans un registre tampon 7. La somme actualisée ainsi obtenue est stockée à son tour dans le registre 5. L'adressage de la mémoire 3 est par ailleurs assuré par un circuit d'adressage 8.

Dans l'exemple de réalisation décrit, la durée Δt est fixée une fois pour toutes et le nombre N de récurrences est fonction de la fréquence de récurrence F utilisée, ces trois paramètres étant liés par la relation N=Δt · F.

Dans l'exemple de réalisation décrit, la mémoire 3 est par ailleurs écrite en séquence suivant des adresses "n" décroissant de N à 0. Le circuit d'adressage 8 comporte alors un compteur 9 décrémenté au rythme de la fréquence de récurrence F, et régulièrement chargé, lorsqu'il atteint la valeur 0, par la valeur N fournie par un circuit 10 de calcul de la valeur N à partir de la durée Δt choisi et de la fréquence de récurrence F utilisée.

Ce circuit 10 comporte un compteur 11 incrémenté au rythme de la fréquence de récurrence F pendant toute la durée Δt de l'impulsion fournie par un monostable 12 qui est déclenché à l'initialisation.

Il est à noter que les différents signaux de commande énoncés au fur et à mesure de la description et regroupés sous la référence commune C n'ont pas tout été représentés sur la figure 1 et sont fournis par un séquenceur 13.

A chaque nouvelle récurrence, le cycle de la mémoire 3 est plus précisément le suivant:

écriture de cette mémoire à l'adresse "n" (0≤n≤N) et chargement de la donnée ainsi écrite dans le registre tampon 6;

décrémentation de l'adresse (modulo N);

lecture de la donnée mémorisée à l'adresse "n−1" et chargement de la donnée ainsi leu dans le registre tampon 7.

Les registres 6 et 7 sont des registres avec commande trois états de leur sortie; ils sont reliés en sortie, par un bus commun 14, à une première entrée 15 de l'unité arithmétique et logique 4 dont la sortie 16 est par ailleurs rebouclée en permanence sur une deuxième entrée 17 par le registre tampon 3.

L'unité arithmétique et logique 4 permet également de comparer la densité de réponses ainsi obtenue à chaque nouvelle récurrence et chargée dans le registre tampon 5, à des valeurs seuil $S_0$ et $S_1$ stockées dans une mémoire morte 18. Cette mémoire morte 18 est elle-même connectée à l'entrée 15 de l'unité arithmétique et logique 4 par le bus commun 14, et adressée par le séquencer 13. Le résultat "s" de la comparaison, servant à la commande du défruiteur, est obtenu sur une sortie 19 de l'unité arithmétique et logique.

Le seuil $S_1$, dit seuil haut, est tel que si le nombre N trouvé est supérieure à ce seuil, le défruiteur est activé.

Par contre, une fois que le défruiteur est activé, il n'est inhibé que si le nombre N devient ensuite inférieur, non pas à ce même seuil haut $S_1$, mais à un seuil $S_0$ inférieur à $S_1$, dit seuil bas, ceci afin d'éviter que se produise un phénomène de hachage dans la commande du défruiteur.

De même, une fois que le défruiteur est inhibé, il n'est activé que si le nombre N devient ensuite supérieur, non pas au seuil bas $S_0$, mais au seuil haut $S_1$.

Cette opération de comparaison implique donc une sélection du seuil ($S_0$ ou $S_1$) à comparer à chaque nouvelle valeur N, qui nécessite elle-même une mémorisation de l'état précédent: activé ou inhibé, du défruiteur. La commande de la mémoire 18, afin de fournir le seuil adéquat, est assurée par le séquenceur 13 qui reçoit pour cela les résultats de comparaison obtenus sur la sortie 19 de l'unité arithmétique et logique 4.

On décrit maintenant plus en détail de circuit 1 de détection de réponse.

Ce circuit 1 fonctionne avac un signal vidéo radar "v" préalablement échantilloné à une fréquence f et quantifié.

Il comporte un circuit 20 de découpage du signal reçu suivant le format attendu d'une réponse, à savoir un message constitué par une série d'états logiques ("0" ou "1") encadré par deux séries d'états logiques "1" correspondant à deux implusions d'encadrement $F_1$ et $F_2$, et un circuit 21, dit circuit de détection de coïncidences, permettant d'observer les tranches de signal ainsi obtenues en vue d'y détecter la présence soit d'une réponse isolée soit de deux réponses se recouvrant partiellement dans le temps.

Le circuit 20 comporte deux registres à décalage 22 et 23, destinés à contenir respectivement les

impulsions d'encadrement $F_1$ et $F_2$, et une ligne à regard 24 destinée à contenir le message proprement dit, tous activés à la fréquence d'échantillonage "f".

Un réponse isolée peut ainsi être détectée simplement par la coïncidence d'un front avant ou d'un front arrière de l'impulsion stockée dans le register 22 et d'un front avant ou d'un front arrière respectivement de l'impulsion stockée dans le registre 23.

En revanche, si deux réponses encadrées respectivement par des impulsions $(F_1, F_2)$ et $(F'_1, F'_2)$ se recouvrent partiellement dans le temps, la première $(F_1, F_2)$ précédant, par exemple la deuxième $(F'_1, F'_2)$, le front arrière de l'impulsion $F_2$ ne peut plus facilement être détecté car cette impulsion $F_2$ est mélangée au message formant la deuxième réponse, et ces deux réponses ne sont pas nécessairement synchrones. Le circuit 21 détecte alors la première réponse en détectant la coïncidence d'un front avant de l'impulsion stockée dans le registre 22 et d'un étant de l'impulsion stockée dans le registre 23 égal à l'état "1".

Si un réponse isolée est reçue, elle est également détectée par cette opération.

De même le circuit 21 détecte la deuxième réponse en détectant la coïncidence d'un front arrière de l'impulsion stockée dans le register 23 et d'un état de l'impulsion stockée dans le registre 22 égal à l'état "1".

En pratique le circuit 21 est par exemple constitué par une mémoire morte adressée par le contenu des registres 22 et 23 et programmée de manière à détecter ces coïncidences.

Le dispositif de prétraitement ainsi décrit s'applique aux extracteurs radars secondaires, classiques ou monoimpulsions.

## Revendications

1. Extracteur radar secondaire, comportant un défruiteur pour éliminer les réponses asynchrones, reçues par ce radar, caractérisé en ce que l'extracteur comporte en outre un dispositif de prétraitement compété d'un circuit de détection de réponses reçues par le radar, de moyens de mesure des variations de la densité de réponses reçues par le radar, et de moyens pour activer ou inhiber ce défruiteur suivant la résultat fourni par lesdits moyens de mesure.

2. Extracteur radar secondaire selon la revendication 1, dans lequel le radar secondaire est muni d'une antenne directive en azimut, caractérisé en ce que les moyens de mesure des variations de la densité de réponses reçues par ce radar sont des moyens de mesure du nombre M de réponses reçues pour des secteurs azimutaux de largeur $\Delta t$ tels que deux secteurs azimutaux observés successivement se recouvrent partiellement, étant distants d'une durée $\delta t$ inférieure à $\Delta t$.

3. Extracteur radar secondaire selon la revendication 2, caractérisé en ce que la durée $\Delta t$ est choisie égale à un nombre entier N de récurrences du signal radar.

4. Extracteur radar secondaire selon la revendication 2, caractérisé en ce que la durée $\delta t$ est choisi égale à une récurrence du signal radar.

5. Extracteur radar secondaire selon les revendications 3 et 4, caractérisé en ce que les moyens de mesure des variations de la densité de réponses reçus par ce radar comportent un compteur (2) pour compter le nombre "m" de réponses reçues pendant chaque récurrence une mémoire 3 pour mémoriser le nombre "m" trouvé pour chaque des récurrences d'un cycle de N récurrences définissant un secteur azimutal donné, et une unité arithmétique (4) pour calculer, pendant le premier cycle de N récurrences traité, la somme M des réponses obtenues sur l'ensemble de ces N récurrences, et pour actualiser cette somme, pendant les cycles suivants, en ajoutant à la dernière somme trouvée, stockée dans un registre tampon (5), le nombre "m" de réponses trouvé pendant la récurrence en cours, fourni par le compteur (2), et en lui retranchant le nombre "m" de réponses le plus ancien stocké dans la mémoire (3).

6. Extracteur radar secondaire selon la revendication 5, caractérisé en ce que le compteur (2) est incrémenté par le circuit de détection de réponse comportant lui-même d'une part un circuit (20) de découpage du signal vidéo radar, préalablement converti en signal numérique, suivant le formant attendu d'une réponse, comportant à son tour deux registres (22, 23) de stockage d'impulsions d'encadrement, avant et arrière, d'un réponse, d'autre part un circuit (21) de détection de coïncidences permettant d'identifier deux réponses se recouvrant partiellement dans le temps, la première par détection simultanée d'un front avant d'impulsion stockée dans le registre de stockage d'impulsion d'encadrement avant et d'un étant logique haut de l'impulsion stockée dans le registre de stockage d'impulsion d'encadrement arrière, puis la deuxième par détection simltanée d'un front arrière de l'impulsion stockée dans le registre de stockage d'impulsion d'encadrement arrière et d'un étant logique haut de l'impulsion stockée dans le registre de stockage d'impulsion d'encadrement avant.

7. Extracteur radar secondaire selon l'une des revendications 1 à 6, caractérisé en ce que les moyens pour activer ou inhiber le défruiteur suivant la densité de réponse sont des moyens pour activer le défruiteur lorsque la densité de réponse est supérieure à un premier seuil $(S_1)$, dit seuil haut, pour inhiber le défruiteur lorsque la densité de réponse est inférieure à un second seuil $(S_0)$, dit seuil bas, inférieure au premier, et pour maintenir le défruiteur dans son état de commande précédent, lorsque la densité de réponse est située entre ces deux seuils.

## Patentansprüche

1. Sekundärradarextraktor mit einem Störsignalunterdrücker zum Ausscheiden der durch dieses Radar empfangenen asynchronen Antworten, dadurch gekennzeichnet, daß der Extraktor weiter eine Vorbehandlungseinrichtung aufweist, die eine Schaltung zur Erfassung der vom Radar empfangenen Antworten, Mittel zur Messung der Dichtenänderungen der vom Radar empfangenen Antworten, und Mittel zum Aktivieren oder Sperren des Störsignalunterdrückers entsprechend dem von den genannten Meßmitteln gelieferten Ergebnis aufweist.

2. Sekundärradarextraktor nach Anspruch 1, bei dem das Sekundärradar mit einer azimutalen Richtantenne ausgerüstet ist, dadurch gekennzeichnet, daß die Mittel zur Messung der Dichteänderungen der vom Radar empfangenen Antworten Mittel zum Messen der Anzahl M der in azimutalen Sektoren der Breite $\Delta t$ empfangenen Antworten sind, derart, daß sich zwei nacheinander beobachtete azimutale Sektoren teilweise überlappen und dabei um die Zeitdauer $\delta t$ kleiner als $\Delta t$ voneinander entfernt sind.

3. Sekundärradarextraktor nach Anspruch 2, dadurch gekennzeichnet, daß die Dauer $\Delta t$ entsprechend einer ganzzahligen Anzahl N von Wiederhohlungen des Radarsignals gewählt ist.

4. Sekundärradarextraktor nach Anspruch 2, dadurch gekennzeichnet, daß die Dauer $\delta t$ entsprechend einer einzelnen Weiderholung des Radarsignals gewählt ist.

5. Sekundärradarextraktor nach den Ansprüchen 3 und 4, dadurch gekennzeichnet, daß die Mittel zur Messung der Dichteänderungen der vom Radar empfangenen Antworten einen Zähler (2) zum Zählen der Anzahl "m" der während jeder Wiederholung empfangenen Antworten, einen Speicher (3) zum Speichern der bei jeder der Wiederholungen eines Zyklus einen gegebenen azimutalen Sektor definierenden von N Wiederholungen ermittelten Anzahl "m", und eine Recheneinheit (4) zur Berechnung der Summe M der während des ersten bearbeiteten Zyklus von N Wiederholungen erhaltenen Antworten und zur Aktualisierung dieser Summe während der folgenden Zyklen, indem zur letzten ermittelten Summe, die in einem Pufferregister (5) gespeichert ist, die Anzahl "m" der während der laufenden Wiederholung ermittelten Antworten hinzuaddiert wird, die durch den Zähler (2) geleifert wird, und indem die älteste im Speicher (3) gespeicherte Anzahl "m" von Antworten abgezogen wird.

6. Sekundärraderextraktor nach Anspruch 5, dadurch gekennzeichnet, daß der Zähler (2) durch die Antworterfassungsschaltung inkrementiert wird, die ihrerseits zum einen eine Schaltung (20) zur Zerlegung des zuvor in ein digitales Signal umgewandelten Radar-Videosignals gemäß dem erwarteten Format einer Antwort aufweist, wobei diese Schaltung zwei Register (22, 23) zum Speichern der vorderen und hinteren Rahmenimpuls einer Antwort besitzt, und die zum anderen eine Schaltung (21) zur Erfassung der Koinzidenzen aufweist, die die Identifizierung zweier sich zeitlich teilweise überlappender Antworten ermöglicht, und zwar der ersten, indem gleichzeitig eine Vorderflanke des im Speicherregister für den vorderen Rahmenimpuls gespeicherten Impulses und der obere logische Zustand des im Speicherregister für den hinteren Rahmenimpuls gespeicherten Impulses erfaßt, wird, und der zweiten, indem gleichzeitig eine Hinterflanke des im Speicherregister für den hinteren Rahmenimpuls gespeicherten Impulses und der obere logische Zustand des im Speicherregister für den vorderen Rahmenimpuls gespeicherten Impulses erfaßt wird.

7. Sekundärradarextraktor nach einem der Ansprüche 1 bis 6, dadurch gekennzeichnet, daß die Mittel zum Aktivieren oder Sperren des Störsignalunterdrückers entsprechend der Antwortdichte dahingehend wirken, daß sie den Signalunterdrücker aktivieren, wenn die Antwortdichte oberhalb einer ersten Schwelle ($S_1$), obere Schwelle genannt, liegt, daß sie den Signalunterdrücker sperren, wenn die Antwortdichte unterhalb einer zweiten Schwelle ($S_0$), untere Schwelle genannte, ·liegt, die unterhalb der oberen Schwelle liegt, und daß sie den Signalunterdrücker in seinem vorherigen Steuerungszustand belassen, wenn die Antwortdichte zwischen den beiden Schwellen liegt. ·

**Claims**

1. A secondary radar extractor comprising a defruiter for eliminating the asynchronous responses received by said radar, characterized in that the extractor comprises in addition a preprocessing device which is composed of a circuit for detecting the responses received by the radar, means for measuring the density variations of the responses received by radar, and means for activating or inhibiting said defruiter in accordance with the result delivered by said measuring means.

2. A secondary radar extractor according to Claim 1, in which the secondary radar is provided with an azimuthal directional antenna, characterized in that the means for measuring the density variations of the responses received by said radar are means for measuring the number M of responses received in azimuthal sectors having a width $\Delta t$, such that two successively observed azimuthal sectors overlap partially while being distant from one another by a duration of time $\delta t$ shorter than $\Delta t$.

3. A secondary radar extractor according to Claim 2, characterized in that the duration of $\Delta t$ is chosen to be equal to an integer number N of recurrences of the radar signal.

4. A secondary radar extractor according to Claim 2, characterized in that the duration of $\delta t$ is chosen to be equal to one recurrence of the radar signal.

5. A secondary radar extractor according to Claims 3 and 4, characterized in that the means for measuring the density variations of responses received by said radar comprise a counter (2) for counting the number "m" of responses received during each recurrence, a memory (3) for storing the number "m" obtained for each of the recurrences of a cycle of N recurrences, defining a given azimuthal sector, and an arithmetic unit (4) for calculating during the first cycle of N considered recurrences the sum M of responses obtained on the total of said N recurrences and for updating said sum during the following cycles by way of adding the number "m" of responses obtained during the running reccurence, delivered by the counter (2), to the last sum obtained and stored in a buffer register (5), and by way of subtracting the number "m" of the oldest responses stored in the memory (3).

6. A secondary radar extractor according to Claim 5, characterized in that the counter (2) is incremented by the response detection circuit which in turn comprises firstly a disassembler circuit (20) for disassembling the radar video signal after having been converted into a digital signal according to the expected format of a response, which latter circuit comprises in turn two registers (22, 23) for storing front and rear framing pulses of a response, and secondly a coincidence detection circuit (21) permitting to identify two responses, which partially overlap one another in time, said first response being identified by way of a simultaneous detection of a rising edge of the pulse stored in the front framing pulse storage register and of an upper logic state of the pulse stored in the storage register storing the rear framing pulse, and said second response by way of a simultaneous detection of a falling edge of the pulse stored in the rear framing pulse storage register and of an upper logic state of the pulse stored in the storage register storing the front framing pulse.

7. A secondary radar extractor according to any one of Claims 1 to 6, characterized in that the means for activating or inhibiting the defruiter in accordance with the response density are means adapted to activate the defruiter when the response density is greater than a first threshold ($S_1$), referred to as upper threshold, to inhibit the defruiter when the response density is lower than a second threshold ($S_0$), referred to as lower threshold and at a lower level than the first threshold, and to maintain the defruiter in its former state of control when the response density is comprised between said two thresholds.

Fig.1

Fig.2

EP 0 184 956 B1